# EUROPEAN PATENT APPLICATION

(11) **EP 3 127 440 A1**
(43) Date of publication of application: **08.02.2017**
(21) Application number: 14888522.1
(22) Date of filing: 03.04.2014
(51) Int. Cl.: A24F 47/00

(54) **INFORMATION INTERACTION METHOD AND SYSTEM APPLYING TO ELECTRONIC CIGARETTES**

(71) Applicant: KIMREE HI-TECH INC., Road Town, Tortola (VG)
(72) Inventor: XIANG, Zhiyong, Dongguan Guangdong 523845 (CN)
(74) Representative: Puschmann Borchert Bardehle Patentanwälte Partnerschaft mbB
(86) International application number: PCT/CN2014/074769
(87) International publication number: WO 2015/149339

(57) **Abstract**

An information interaction method and system applying to electronic cigarettes, which are used by at least two electronic cigarettes communicating within a preset distance. The method comprises the following steps: a. at least one electronic cigarette sends request information carrying tobacco tar taste information thereof in the area; b. at least one electronic cigarette receives and identifies the request information, generates, according to the request information, reply information carrying a tobacco tar taste thereof, and sends the reply information in the short-distance area; and c. after receiving the reply information, the electronic cigarette sending the request information saves, and/or displays, and/or generates a prompt of, and/or forwards the reply information. The electronic cigarettes providing a communication function greatly facilitate communication of users in a smoking process.

## Description

### TECHNICAL FIELD

The present invention relates to electrical heating products, and more particularly relates to an information interaction method and system applied to electronic cigarettes.

### BACKGROUND

An electronic cigarette generally comprises an atomizer and a battery stick, the atomizer is used for atomizing the tobacco tar, every kind of atomizer is provided with at least one type of taste of tobacco juice, the battery stick is used for supplying power for the atomizer.

The existing electronic cigarettes only have a simple function of smoking, but cannot let the users share and communicate with their smoking feeling. The function is single. Users' experience is not high.

Besides, the electronic cigarettes in prior art cannot obtain the taste type of the replaced disposable atomizer, cannot identify the tobacco tar taste automatically. When users like inhaling a type of taste, they may not know the name of the taste, and cannot recommend it to other smokers.

### SUMMARY

The technical problem that the present invention will solve is, aiming at the defect that the above-mentioned electronic cigarettes in prior art cannot satisfy the need of sharing the users' smoking feeling, providing an information interaction method and system applied to electronic cigarettes.

The technical solution that the present invention applies to solve the technical problem is: the present invention provides an information interaction method applied to electronic cigarettes, the method is used for at least two electronic cigarettes communicating with each other in an area formed within a preset distance, the method comprises following steps:
a. at least one electronic cigarette in the area sends request information carrying tobacco tar taste information thereof to other electronic cigarettes in the area; and/or sends reply information for responding request information of other electronic cigarettes;
b. at least one electronic cigarette receives and identifies the request information, and generates reply information carrying tobacco tar taste thereof according to the request information; and/or at least one other electronic cigarette receives reply information replied by requested electronic cigarettes in the area;
c. at least one electronic cigarette that receives the request information or the reply information performs at least one following action: saves obtained electronic cigarette tobacco tar taste information, displays obtained electronic cigarette tobacco tar taste information, sends prompting information according to obtained electronic cigarette tobacco tar taste information, and forwards obtained electronic cigarette tobacco tar taste information.

In the information interaction method applied to electronic cigarettes of the present invention, the step b comprises:
identifies the request information, obtains tobacco tar taste information in the request information;
matches tobacco tar taste information in the request information with its own tobacco tar taste information, after successfully matching, generates the reply information.

In the information interaction method applied to electronic cigarettes of the present invention, the tobacco tar taste information is indicated by a taste code, the step a comprises:
generates a smoking signal when smoking, generates the request information that comprises the taste code according to the smoking signal.

In the information interaction method applied to electronic cigarettes of the present invention, the step a comprises:
chooses the corresponding taste code by keys.

In the information interaction method applied to electronic cigarettes of the present invention, the at least two electronic cigarettes comprises a code paste used for indicating the current tobacco tar taste information, the step a comprises:
obtains the taste code by scanning the code paste.

In the information interaction method applied to electronic cigarettes of the present invention, the step b further comprises:
controls the request information or the reply information to be received and identified via a switch.

In the information interaction method applied to electronic cigarettes of the present invention, each of the electronic cigarettes receives the request information and/or the reply information, and prompts via an indicating light if identifying same tobacco tar taste with itself.

In the information interaction method applied to electronic cigarettes of the present invention, the method further comprises:
saves received request information and/or reply information, and makes statistics for the tobacco tar taste information.

In the information interaction method applied to electronic cigarettes of the present invention, the method further comprises:
displays tobacco tar taste information and/or working state of the current electronic cigarette.

In the information interaction method applied to electronic cigarettes of the present invention, the request information and the reply information transmitted via radio frequency.

The present invention further provides an information interaction method applied to electronic cigarettes, the method is used for at least two electronic cigarettes communicating with each other in an area formed within a preset distance, the method comprises following steps:
at least one electronic cigarette sends request information carrying tobacco tar taste information thereof to all other electronic cigarettes in the area or sends reply information carrying tobacco tar taste information thereof;
   or
at least one electronic cigarette sends request information carrying tobacco tar taste information thereof to specified electronic cigarettes in the area or sends reply information carrying tobacco tar taste information thereof;
the method further comprises following steps:
   at least one electronic cigarette that receives the request information identifies the request information and sends reply information carrying tobacco tar taste information thereof to an electronic cigarette that sends the request information or sends reply information carrying tobacco tar taste information thereof to all other electronic cigarettes in the area;
   at least one electronic cigarette that receives the request information or the reply information saves or/and displays or/and prompts or/and forwards the request information or the reply information.

Besides, the present invention further provides an information interaction system applied to electronic cigarettes, the system comprises at least two electronic cigarettes communicating with each other in an area formed within a preset distance, each of the electronic cigarettes comprises: a processor module, a sending module and a receiving module which are connected to the processor module respectively, wherein
the sending module is used for sending request information carrying tobacco tar taste information thereof in the area and/or reply information for responding request information of other electronic cigarettes;
the receiving module is used for receiving request information carrying tobacco tar taste of the other electronic cigarettes sent by other electronic cigarettes in the area and/or reply information replied by requested electronic cigarettes in the area;
the processor module is used for generating request information carrying tobacco tar taste thereof and/or reply information and identifying request information and/or reply information sent by the other electronic cigarettes, and performs following actions: saves electronic cigarette tobacco tar taste information, displays obtained electronic cigarette tobacco tar taste information, sends prompting information according to obtained electronic cigarette tobacco tar taste information, and forwards obtained electronic cigarette tobacco tar taste information.

In the information interaction system applied to electronic cigarettes of the present invention, the processor module further comprises;
an identifying unit, used for identifying request information of the other electronic cigarettes and obtaining tobacco tar taste information of the other electronic cigarettes;
a matching unit, used for matching tobacco tar taste information of the other electronic cigarettes with its own tobacco tar taste information, after successfully matching, controlling the sending module to send the reply information.

In the information interaction system applied to electronic cigarettes of the present invention, the processor module 10 further connects to:
a prompt module, used for prompting after the receiving module receives request information and/or reply information carrying tobacco tar taste of the other electronic cigarettes sent by other electronic cigarettes in the area.

In the information interaction system applied to electronic cigarettes of the present invention, the processor module further connects to:
a switch unit, used for receiving users' input to control the identifying unit to turn on or off.

In the information interaction system applied to electronic cigarettes of the present invention, the tobacco tar taste information is indicated by a taste code, the electronic cigarette further comprises a taste code obtaining unit connected to the processor module, the taste code obtaining unit is used for obtaining the taste code of the electronic cigarette itself.

In the information interaction system applied to electronic cigarettes of the present invention, the taste code obtaining unit comprises a saving unit used for saving taste code and a confirming unit used for confirming own taste code.

In the information interaction system applied to electronic cigarettes of the present invention, the confirming unit is keys, used for receiving users' input to choose the corresponding taste code.

In the information interaction system applied to electronic cigarettes of the present invention, the electronic cigarette further comprises a code paste used for indicating the current tobacco tar taste information, the confirming unit is a scanning identification device, the scanning identification device is used for scanning the code paste to confirm the taste code.

In the information interaction system applied to electronic cigarettes of the present invention, the electronic cigarette further comprises a statistics module, the statistics module used for making statistics for request information and/or reply information of the other electronic cigarettes obtained by the receiving module, and prompting the quantity of electronic cigarettes that have the same tobacco tar taste with itself.

The beneficial effects of implementing the information interaction method and system applied to electronic cigarettes of the present invention are: The electronic cigarette of the embodiment in the present invention has the function of radio frequency communication in a small range, and can communicate with the electronic cigarette that also has the function of radio frequency communication in a small range. It is greatly convenient for the users to communicate the smoke taste with each other. The electronic cigarette is not only a cigarette but a bridge of people to communicate. Besides, the electronic cigarettes can obtain tobacco tar information of each other after communicating; by making statistics for the tobacco tar taste, it can provide help for the users to choose the suitable electronic cigarette; on the other hand, it is convenient for the users of electronic cigarettes to develop social contact, it is beneficial for users' communication and quitting smoking; it improves users' feeling.

### BRIEF DESCRIPTION OF THE DRAWINGS

The present invention will be further described with reference to the accompanying drawings and embodiments in the following.
- Fig. 1: is a schematic diagram of the information interaction system applied to electronic cigarettes of the present invention;
- Fig. 2: is a structural schematic diagram of the electronic cigarette shown in Figure 1;
- Fig. 3: is a structural schematic diagram of the processor module of the electronic cigarette shown in Figure 2;
- Fig. 4: is a circuit schematic diagram of the first preferred embodiment of the electronic cigarette shown in Figure 2;
- Fig. 5: is a circuit schematic diagram of the second preferred embodiment of the electronic cigarette shown in Figure 2;
- Fig. 6: is a process schematic diagram of the information interaction method applied to electronic cigarettes of the present invention.

### DETAILED DESCRIPTION OF THE PREFERRED EMBODIMENT

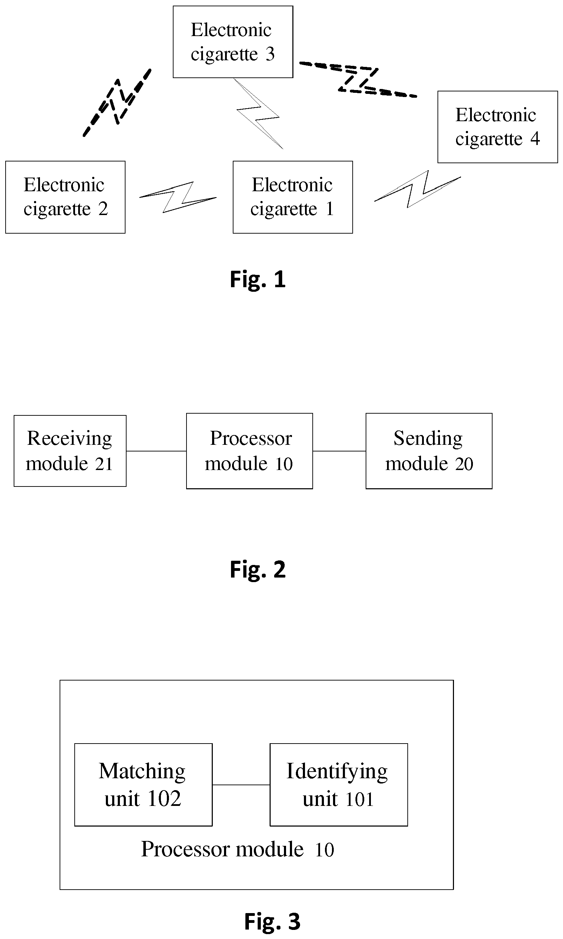

In order to let electronic cigarette users conveniently communicate their feeling with each other, the present invention provides an information interaction method and system applied to electronic cigarettes. As shown in Figure 1,the information interaction system applied to electronic cigarettes comprises at least two electronic cigarettes. The electronic cigarette has the function of receiving and sending signals. During smoking, users can send their own tobacco tar taste information and receive other users' tobacco tar taste information to find the users with same tobacco tar taste. And they can further share smoking feeling. The users' feeling can be improved.

In order to better understand the technical features, purpose and effect of the present invention, the preferred embodiment will be described in detail in the following.

As shown in Figure 2, in the information interaction system applied to electronic cigarettes of the present invention, electronic cigarettes can communicate in an area formed within a preset distance. The every electronic cigarette comprises: a processor module 10, a sending module 20 and a receiving module 21 which are connected to the processor module 10 respectively. The information interaction of electronic cigarettes is realized by radio frequency in the embodiment. The optional frequency is 315MHz, 433MHz or 900MHz. Thus the sending module 20 and the receiving module 21 can be chosen as RF modules, and comprise a transmitting antenna and a receiving antenna respectively. The above-mentioned distance is related to the chosen frequency of the sending module 20 and the receiving module 21. The sending module 20 is used for sending request information carrying tobacco tar taste information thereof in the area or reply information for responding request information of other electronic cigarettes. The receiving module 21 is used for receiving request information carrying tobacco tar taste of the other electronic cigarettes sent by other electronic cigarettes in the area or reply information replied by requested electronic cigarettes in the area. The processor module 10 is used for generating request information carrying tobacco tar taste thereof or reply information and identifying request information or reply information sent by the electronic cigarettes, and performs following actions: saves obtained electronic cigarette tobacco tar taste information, displays obtained electronic cigarette tobacco tar taste information, sends prompting information according to obtained electronic cigarette tobacco tar taste information, and forwards obtained electronic cigarette tobacco tar taste information. The processor module is a programmable component, such as microcontroller. The optional microcontroller type is SN8P2712.

Besides, same as the existing electronic cigarettes, in the information interaction system applied to electronic cigarettes of the present invention, the electronic cigarette comprises an atomizer used for atomizing the tobacco tar, a battery stick used for supplying power for the atomizer, and an air flow sensor used for controlling the atomization of the tobacco tar. The battery stick supplies power for the processor module 10. The air flow sensor can be directly used as the controlling end of the processor module 10. During the use of the electronic cigarette, once the atomizer is atomizing, the processor module 10 is automatically turned on and enters the working state.

Specifically, referred to Figure 3, the processor module 10 further comprises an identifying unit 101 and a matching unit 102. The identifying unit 101 is connected to the receiving module 21. The receiving module 21 transmits the request information or reply information carrying tobacco tar taste information of the other electronic cigarettes to the identifying unit 101. The identifying unit 101 is used for identifying request information of the other electronic cigarettes and obtaining tobacco tar taste information of the other electronic cigarettes. The matching unit 102 is connected to the sending module 20. The matching unit 102 is used for matching tobacco tar taste information of the other electronic cigarettes with its own tobacco tar taste information, after successfully matching, controlling the sending module 20 to send the reply information.

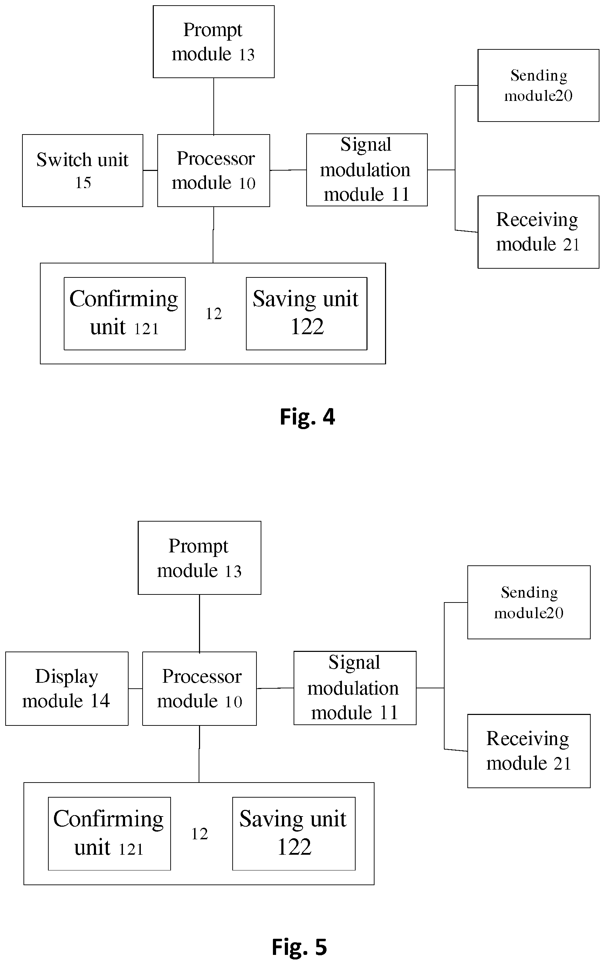

Referred to Figure 4, in the other nonrestrictive embodiments of the present invention, the electronic cigarette further comprises a prompt module 13 connected to the processor module 10, taste code obtaining unit 12, and a switch unit 15. The switch unit 15 controls the processor module 10 to turn on or off according to users' input. Or the switch unit 15 is specifically connected to the identifying unit 101 of the processor module 10, and only turns on or off the identifying unit 101 according to users' operation. Thus it do not influence the electronic cigarette to receive request information or reply information of other electronic cigarettes. The prompt module 13 prompts after the receiving module 21 receives request information or reply information carrying tobacco tar taste of the other electronic cigarettes sent by other electronic cigarettes in the area. For example, the prompt module 13 is a speaker or an indicating light. Furthermore, the sending module 20 and the receiving module 21 are both connected to the signal modulation module 11, and connected to the processor module 10 after the modulation of the signal modulation module 11. The signal modulation module 11 comprises circuit structures such as A/D conversion circuit and signal amplification circuit.

The tobacco tar taste information is indicated by the specific taste code. The taste code obtaining unit 12 is used for obtaining the taste code of the electronic cigarette itself. The taste code corresponds with specific tobacco tar taste. Further, the taste code obtaining unit 12 comprises a saving unit 122 and a confirming unit 121. The saving unit 122 is used for saving the taste code, and can be chosen as a flash unit or an EEPROM memory. The confirming unit 121 is used for confirming the taste code of the electronic cigarette itself. The confirming unit 121 is a key, and is used for receiving users' input to choose the corresponding taste code.

In the embodiment of the present invention, hexadecimal is applied to set the electronic cigarette information type. Specifically, "0X01", "0X02", "0X03", "0X04", "0X05", "0X06", "0X07", "0X08" represents the electronic cigarette model, the electronic cigarette battery capacity, applicative charger model for the electronic cigarette, the electronic cigarette manufacturer information, the electronic cigarette manufacturing country, users' information, tobacco tar taste information, and users' evaluation information about the electronic cigarette, respectively.

And in the embodiment of the present invention, hexadecimal is applied to identify the specific electronic cigarette information that is comprised in the various electronic cigarette information type. For example, for the electronic cigarette type, if its corresponding specific electronic cigarette information comprises: model 1, model 2, model 3, then "0X01", "0X02", "0X03" are applied to represent model 1, model 2, model 3, respectively. In another example, for the electronic cigarette manufacturing country, if the specific electronic cigarette information comprises: China, America, Japan, then "0X01", "0X02", "0X03" are applied to represent China, America, Japan, respectively. By this analogy, the corresponding relation table of the electronic cigarette information type and its specific electronic cigarette information can be obtained as shown in Table 1. In the embodiment of the present invention, the electronic cigarette can save the corresponding relation table.

**Table 1**

| electronic cigarette information type | electronic cigarette information | corresponding hexadecimal identification of the electronic cigarette |
|---|---|---|
| electronic cigarette model | model 1 | 0X01 |
| | model 2 | 0X02 |
| | model 3 | 0X03 |
| electronic cigarette battery capacity | 650mAH | 0X01 |
| | 1000mAH | 0X02 |
| applicative charger model for the electronic cigarette | charger model 1 | 0X01 |
| | charger model 2 | 0X02 |
| electronic cigarette manufacturer information | manufacturer 1 | 0X01 |
| | manufacturer 2 | 0X02 |
| | manufacturer 3 | 0X03 |
| electronic cigarette | China | 0X01 |
| manufacturing country | America | 0X02 |
| | Japan | 0X03 |
| tobacco tar taste information | taste 1 | 0X01 |
| | taste 2 | 0X02 |
| users' evaluation information about the electronic cigarette | excellent | 0X01 |
| | average | 0X02 |

The request information or the reply information sent by the electronic cigarette comprises: head code field, identification code field, data field and the check code field. The size of the head code field is 1 byte. For example, the head code field can be set as "0X55". The size of the identification code field is 1 byte, and is used for identify whether the information sent by the electronic cigarette is the request information or the reply information. It can be set: if it is the request information then the identification code field is "0X65", if it is the reply information then the identification code field is "0X9A". The size of the check code field is 1 byte or 2 byte, and is used for realizing information identification. Specifically, CRC cyclic check can be applied to check. The size of the data field can be adjusted according to the actual situation.

If the identification code field identifies the information sent by the electronic cigarette is the request information, then the information that is comprised in the data field is the electronic cigarette information obtaining request. For example, if the data field is "0X01", it represents that the request information sent by the electronic cigarette is requesting to obtain the "electronic cigarette model" information of the other electronic cigarettes, and the reply information of other electronic cigarettes should contain the electronic cigarette model information of itself; if the data field is "0X02", it represents requesting "electronic cigarette battery capacity", others are followed by this analogy.

If the identification code field identifies the information sent by the electronic cigarette is the reply information, then the data field contains electronic cigarette model information and its corresponding electronic cigarette information. And the electronic cigarette information in the reply information corresponds with the electronic cigarette information obtaining request. For example, if the data field of the received request information is "0X01", then the data field of the reply information is "0X01 0X01", which represents the electronic cigarette model is 0X01.

In the embodiment of the present invention, if the reply information contains the users' information, then the users' information is coded by applying GB2312 location code to constitute the data field to form the reply information.

Besides, the hexadecimal that is applied in the embodiment of the present invention can be replaced by the binary and the decimal.

Combining a specific embodiment, the information interaction method applied to electronic cigarettes in the embodiment of the present invention will be explained in detail in the following.

Assume that 5 electronic cigarettes are in communication to interact information. The electronic cigarette A and the electronic cigarette B are the two of the five. If the electronic cigarette A wants to send request information that contains "own tobacco tar taste information" obtaining request to the electronic cigarette B, and the model of the electronic cigarette B is just model 1, then the electronic cigarette A can communicate with the electronic cigarette B by following method:

After the electronic cigarette A is triggered to generate a trigger signal used for sending information, generates request information, and sends the request information to the other 4 electronic cigarettes by radio. The request information is:

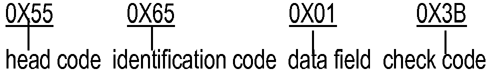

The electronic cigarette B decodes after receiving the request information,. As "0X65" represents the information is the request information, and "0X01" represents "tobacco tar taste model". Thus, assume that the tobacco tar taste model of the electronic cigarette B is just model 1, then the reply information generated according to the saved own electronic cigarette model is:

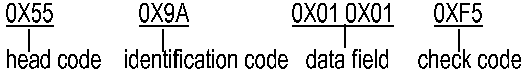

The electronic cigarette B sends the reply information to the other 4 electronic cigarettes by radio. Thus the electronic cigarette A can receive the reply information and obtain the information of the electronic cigarette B with the same tobacco tar taste information.

The electronic cigarette A decodes the received reply information to obtain that the "electronic cigarette model" of the electronic cigarette B is " model 2". Thus, the electronic cigarette A can further execute the actions such as saving, displaying. It can also forward the model of the electronic cigarette B. Meanwhile, due to receiving the reply from the electronic cigarette with the same tobacco tar taste information, the electronic cigarette A can send prompt information.

In the embodiment of the present invention, if the electronic cigarette A obtains the reply information of multiple electronic cigarettes, then can make statistics analysis. The statistics analysis contains: make statistics for the quantity of the obtained electronic cigarettes with same tobacco tar taste, and save, display, forward the statistics processing results or prompt according to the statistics processing results. For example, if obtaining 4 electronic cigarettes with same tobacco tar taste, then the quantity can be displayed as 4. Thus, users can know which kind of electronic cigarette is popular. It can provide help for the users to choose the tobacco tar taste.

In the embodiment of the present invention, the above-mentioned same tobacco tar taste information interaction can be applied to other information (the electronic cigarette battery capacity, applicative charger model for the electronic cigarette, the electronic cigarette manufacturer information, the electronic cigarette manufacturing country, users' information, tobacco tar taste information, and users' evaluation information about the electronic cigarette), the realization way is same as the principle of the above-mentioned "tobacco tar taste information" information interaction, the examples will not be described one by one.

In the embodiment of the present invention, the information interaction method applied to electronic cigarettes can be further used for the emergency call, the specific embodiment is:

After the electronic cigarette is triggered to generate emergency trigger information, it sends the emergency trigger information to one or more electronic cigarettes. The emergency trigger information contains a field that indicates the emergency call. For example, the identification code field of the above-mentioned request information can be set as "0X10", the data field can be set as "0X00". Then when other electronic cigarettes receive this information, they can identify this information as emergency call information by decoding, thus, they can send prompt information to prompt users (for example, display "SOS" via the display module of the electronic cigarette and send the alarm). Users will know someone around is calling in emergency, then they can seek help for the emergency caller.

In the other nonrestrictive embodiments of the present invention, the electronic cigarette further comprises a code paste used for indicating current tobacco tar taste information. The code paste can be a RFID electronic tag. The RFID electronic tag is attached to the atomizer to indicate the taste of the tobacco tar in the atomizer. The corresponding confirming unit 121 is a scanning identification device. The scanning identification device is used for scanning the code paste to confirm the taste code. Thus when users replace the atomizer, its code paste updates automatically. Users do not need to input manually. The processor unit 10 can obtain by automatically scanning the identification device to generate the request information or the reply information carrying tobacco tar taste thereof. The operation is easy and convenient.

Referred to Figure 5, in another preferred embodiment of the present invention, the electronic cigarette further comprises a display module 14 connected to the processor module 10. The display module14 is used for displaying the working state of the current electronic cigarette and current tobacco tar taste of the atomizer. Users do not need to disassemble the atomizer, they can obtain the current electronic cigarette tobacco tar taste directly via the display module 14.

In the other nonrestrictive embodiments of the present invention, the electronic cigarette further comprises a statistics module connected to the processor module 10. The request information and the reply information in the embodiment can carry specific ID code indicating its electronic cigarette. Thus the statistics module can make statistics for request information or reply information of the other electronic cigarettes obtained by the receiving module 21, and prompt the quantity of electronic cigarettes that have the same tobacco tar taste with itself.

Combining with the specific structure of the above-mentioned information interaction system applied to electronic cigarettes, the information interaction method applied to electronic cigarettes will be described in the following.

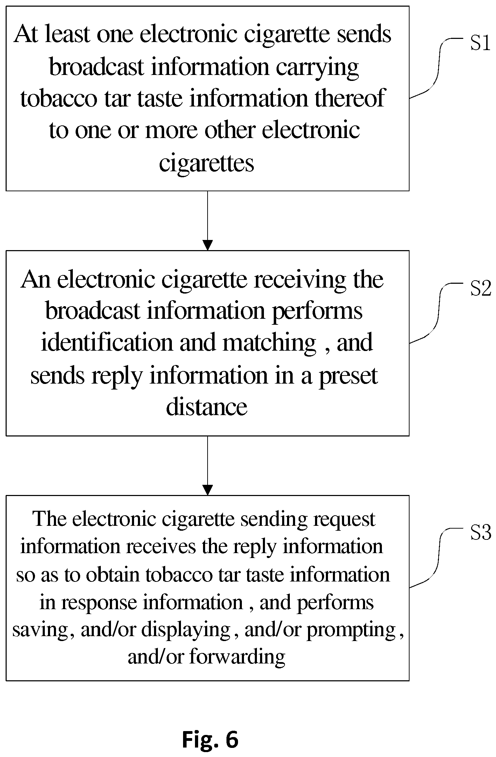

Figure 6 is a process schematic diagram of the information interaction method applied to electronic cigarettes of the present invention.

The information interaction method of the embodiment of the present invention transmits signals via electromagnetic wave signal such as radio frequency signal. The method is used for at least two electronic cigarettes communicating in an area formed within a preset distance (in the communication range of the electronic cigarette radio frequency communication module). The information interaction method applied to electronic cigarettes of the embodiment of the present invention comprises following steps:
a. at least one electronic cigarette in the area sends request information carrying tobacco tar taste information thereof to other electronic cigarettes in the area; and/or sends reply information for responding request information of other electronic cigarettes;
b. at least one electronic cigarette receives and identifies the request information, and generates reply information carrying tobacco tar taste thereof according to the request information; and/or at least one other electronic cigarette receives reply information replied by requested electronic cigarettes in the area;
c. at least one electronic cigarette that receives the request information or the reply information performs at least one following action: saves obtained electronic cigarette tobacco tar taste information, displays obtained electronic cigarette tobacco tar taste information, sends prompting information according to obtained electronic cigarette tobacco tar taste information, and forwards obtained electronic cigarette tobacco tar taste information.

At least one electronic cigarette that sends the above mentioned request information can be the information request end. And at least one electronic cigarette that receives the request information, and generates and sends the reply information according to the request information can be the information respond end correspondingly. Thus the first embodiment of the information interaction method applied to electronic cigarettes can be described as followed:
S1. the information request end sends request information carrying tobacco tar taste information thereof in the area.
S2. the information respond end in the area receives and identifies the request information, generates reply information carrying tobacco tar taste thereof according to the request information, and sends the reply information in the area.
S3. the information request end receives the reply information and performs at least one following action: saves obtained electronic cigarette tobacco tar taste information, displays obtained electronic cigarette tobacco tar taste information, sends prompting information according to obtained electronic cigarette tobacco tar taste information, and forwards obtained electronic cigarette tobacco tar taste information.

Besides, when the information respond end receives the request information in the above mentioned step S2, can perform one of the following actions: saves obtained electronic cigarette tobacco tar taste information, displays obtained electronic cigarette tobacco tar taste information, sends prompting information according to obtained electronic cigarette tobacco tar taste information, and forwards obtained electronic cigarette tobacco tar taste information.

Combining with the specific structure of Figures 1-5, the information interaction method applied to electronic cigarettes will be further described in the following.

During the process of using electronic cigarettes by the users, when users want to know if there is an electronic cigarette around with same taste, the electronic cigarette can send request information carrying tobacco tar taste information thereof within a preset distance. And other electronic cigarette users in the preset distance can reply to the request information after receiving the reply information. So the communication between users about the smoking feeling can be improved.

Specifically, in the information interaction method applied to electronic cigarettes, the step S1 is accomplished by the information request end. It can be proceeded in the following steps:
- S10.: the information request end users turn on the processor module 10 via the switch unit 15;
- S11.: the information request end confirms the current taste code via the taste code obtaining unit 12;
- S12.: the processor module modulates the confirmed taste code in the step S01 via the modulation module 11 and then generates the request information, the request information carries the tobacco tar taste information of the information request end;
- S13.: The sending module 20 sends the above mentioned request information within the preset distance.
the step S2 is executed by the information receive end, the specific steps are as followed:
- S20.: turn on the processor module 10 via the switch unit 15;
- S21.: the receiving module 21 receives the request information, and transmits the request information to the modulation module 11, and then to the identification unit 101 after the modulation module 11 modulates the request information, the identification unit 101 identifies the request information and obtains the tobacco tar information in the request information;
- S22.: confirm the current taste code via the taste code obtaining unit 12, the matching unit 122 matches the tobacco tar information in the request information with its own tobacco tar information;
- S23.: after successfully matching, the sending module 20 sends the reply information carrying the tobacco tar taste information thereof within the preset distance.
- S24.: if matching fails, then the reply information is not sent, save /and display or/and prompt or/and forward the above mentioned the tobacco tar taste information of the request information.

The above mentioned step S2 can comprise: S25. the statistics module can make statistics for request information obtained by the receiving module 21, and prompt the quantity of electronic cigarettes that have the same tobacco tar taste with itself. The request information in the embodiment can carry specific ID code indicating its electronic cigarette. Thus the statistics module can make statistics for request information obtained by the receiving module 21, and prompt the quantity of electronic cigarettes that have the same tobacco tar taste with itself.

The above mentioned step S3 is executed by the information request end, the specific steps are as followed:
- S30.: the receiving module 20 of the information request end receives the reply information in the area,
- S31.: the prompt unit 13 prompts. The prompt unit 13 is a speaker or a indicating light.

The above mentioned step S3 can comprise: S32. the statistics module can make statistics for reply information of the other electronic cigarettes obtained by the receiving module 21, and prompt the quantity of electronic cigarettes that have the same tobacco tar taste with itself. The reply information in the embodiment can carry specific ID code indicating its electronic cigarette. Thus the statistics module can make statistics for reply information of the other electronic cigarettes obtained by the receiving module 21, and prompt the quantity of electronic cigarettes that have the same tobacco tar taste with itself.

Besides, in the process of the above mentioned information interaction method applied to electronic cigarettes, the information request end and the information receive end can both display the current electronic cigarette working state and the tobacco tar taste of the current atomizer.

In the above mentioned embodiment of the present invention, when the electronic cigarette receives and sends the request information, the users control by operating the switch unit 15. Besides, the electronic cigarette can be set as automatically receiving information mode (when the other electronic cigarettes in the communication range sends request information or reply information, automatically receives information) and automatically sending information mode (after receiving request information, automatically identifies and sends reply information).

Further, the above mentioned step S12 comprises:

The air flow sensor generates the smoking signal when smoking, the smoking signal triggers the processor module 10, the processor module 10 controls the taste code unit 12 to obtain its own tobacco tar taste information. In the first embodiment of the present invention, the saved taste code in the saving unit 122 is chosen by users' key operation. For example, the surface of the above mentioned electronic cigarette is provided with keys, such as left right choosing keys and a confirming key. Users choose the proper taste code via the left right choosing keys and press the confirming key to select. The display module 14 can display the tobacco tar taste type. It is convenient for the users to operate.

In the other nonrestrictive embodiments of the present invention, the scanning identification device scans the code paste attached on the atomizer to confirm the taste code. Thus when users replace the atomizer, its code paste updates automatically. Users do not need to input manually. The processor unit 10 can obtain by automatically scanning the identification device to generate the request information or the reply information carrying tobacco tar taste thereof. The operation is easy and convenient.

When every electronic cigarette receives the request information or the reply information, and identifies the same tobacco tar taste information with itself, prompts via the indicating light.

Besides, the request information and the reply information can have specific data field respectively. After the identification unit receives the information sent by other electronic cigarettes, it can judge whether the information is request information or the reply information by identifying specific field.

The information interaction mode between the electronic cigarettes in the present invention is broadcast. It can be understood that the information interaction method applied to electronic cigarettes can apply the one to one and the one to more mode. In the one to one or the one to more mode, the two interacted electronic cigarettes can establish connection first, and then interact information.

In the information interaction method applied to electronic cigarettes of the embodiment of the present invention, the request information or the reply information sent by the electronic cigarette can be encrypted (can apply existing encryption algorithm). Thus the electronic cigarette that receives the information applies corresponding decipherment algorithm to decipher. Thus the safety of the information interaction between the electronic cigarettes can be enhanced.

The electronic cigarette of the embodiment in the present invention has the function of radio frequency communication in a small range, and can communicate with the electronic cigarette that also has the function of radio frequency communication in a small range. It is greatly convenient for the users to communicate the smoke taste with each other. The electronic cigarette is not only a cigarette but a bridge of people to communicate.

The electronic cigarette of the embodiment in the present invention can let the electronic cigarettes obtain tobacco tar information of each other after communicating; by making statistics for the tobacco tar taste, it can provide help for the users to choose the suitable electronic cigarette; on the other hand, it is convenient for the users of electronic cigarettes to develop social contact, it is beneficial for users' communication and quitting smoking; it improves users' feeling.

Combining with the accompanying drawings, embodiments of the present invention are described. However, the present invention is not limited by the above embodiments, which means that the above specific embodiments are only schematic, rather than restrictive. It should be understood that, in the inspiration of the present invention, those skilled in the art who appreciate and realize all or part of the process in above embodiments may make many modifications or alternatives, without going beyond the purpose and the scope the claims intend to protect of the present application. All these belong to the protection of the present invention.

## Claims

1. An information interaction method applied to electronic cigarettes, wherein the method is used for at least two electronic cigarettes communicating with each other in an area formed within a preset distance, the method comprises following steps:
a. at least one electronic cigarette in the area sends request information carrying tobacco tar taste information thereof to other electronic cigarettes in the area; and/or sends reply information for responding request information of other electronic cigarettes;
b. at least one electronic cigarette receives and identifies the request information, and generates reply information carrying tobacco tar taste thereof according to the request information; and/or at least one other electronic cigarette receives reply information replied by requested electronic cigarettes in the area;
c. at least one electronic cigarette that receives the request information or the reply information performs at least one following action: saves obtained electronic cigarette tobacco tar taste information, displays obtained electronic cigarette tobacco tar taste information, sends prompting information according to obtained electronic cigarette tobacco tar taste information, and forwards obtained electronic cigarette tobacco tar taste information.

2. The information interaction method applied to electronic cigarettes according to claim 1,
wherein the step b comprises:
identifies the request information, obtains tobacco tar taste information in the request information;
matches tobacco tar taste information in the request information with its own tobacco tar taste information, after successfully matching, generates the reply information.

3. The information interaction method applied to electronic cigarettes according to claim 2,
wherein the tobacco tar taste information is indicated by a taste code ,the step a comprises:
generates a smoking signal when smoking, generates the request information that comprises the taste code according to the smoking signal.

4. The information interaction method applied to electronic cigarettes according to claim 3,
wherein the step a comprises:
chooses the corresponding taste code by keys.

5. The information interaction method applied to electronic cigarettes according to claim 3,
wherein the at least two electronic cigarettes comprises a code paste used for indicating the current tobacco tar taste information, the step a comprises:
obtains the taste code by scanning the code paste.

6. The information interaction method applied to electronic cigarettes according to claim 2,
wherein the step b further comprises:
controls the request information or the reply information to be received and identified via a switch.

7. The information interaction method applied to electronic cigarettes according to claim 1,
wherein each of the electronic cigarettes receives the request information or the reply information, and prompts via an indicating light if identifying same tobacco tar taste with itself.

8. The information interaction method applied to electronic cigarettes according to claim 1,
wherein the method further comprises:
saves received request information or reply information, and makes statistics for the tobacco tar taste information.

9. The information interaction method applied to electronic cigarettes according to claim 1,
wherein the method comprises:
displays tobacco tar taste information or working state of the current electronic cigarette.

10. The information interaction method applied to electronic cigarettes according to claim 1,
wherein the request information and the reply information transmit via radio frequency.

11. An information interaction method applied to electronic cigarettes, wherein the method is used for at least two electronic cigarettes communicating with each other in an area formed within a preset distance, the method comprises following steps:
at least one electronic cigarette sends request information carrying tobacco tar taste information thereof to all other electronic cigarettes in the area or sends reply information carrying tobacco tar taste information thereof;
or
at least one electronic cigarette sends request information carrying tobacco tar taste information thereof to specified electronic cigarettes in the area or sends reply information carrying tobacco tar taste information thereof;
the method further comprises following steps:
at least one electronic cigarette that receives the request information identifies the request information and sends reply information carrying tobacco tar taste information thereof to an electronic cigarette that sends the request information or sends reply information carrying tobacco tar taste information thereof to all other electronic cigarettes in the area;
at least one electronic cigarette that receives the request information or the reply information saves or/and displays or /and prompts or/and forwards the request information or the reply information.

12. An information interaction system applied to electronic cigarettes, wherein the system comprises at least two electronic cigarettes communicating with each other in an area formed within a preset distance, each of the electronic cigarettes comprises:
a processor module (10), a sending module (20) and a receiving module (21) which are connected to the processor module (10) respectively, wherein
the sending module (20) is used for sending request information carrying tobacco tar taste information thereof in the area or reply information for responding request information of other electronic cigarettes;
the receiving module (21) is used for receiving request information carrying tobacco tar taste of the other electronic cigarettes sent by other electronic cigarettes in the area or reply information replied by requested electronic cigarettes in the area;
the processor module (10) is used for generating request information or reply information carrying tobacco tar taste thereof and identifying request information or reply information sent by the other electronic cigarettes, and performs following actions: saves obtained electronic cigarette tobacco tar taste information, displays obtained electronic cigarette tobacco tar taste information, sends prompting information according to obtained electronic cigarette tobacco tar taste information, and forwards obtained electronic cigarette tobacco tar taste information.

13. The information interaction system applied to electronic cigarettes according to claim 12,
wherein the processor module (10) further comprises;
an identifying unit (101), used for identifying request information of the other electronic cigarettes and obtaining tobacco tar taste information of the other electronic cigarettes; a matching unit (102), used for matching tobacco tar taste information of the other electronic cigarettes with its own tobacco tar taste information, after successfully matching, controlling the sending module (20) to send the reply information.

14. The information interaction system applied to electronic cigarettes according to claim 13,
wherein the processor module (10) further connects to:
a prompt module (13), used for prompting after the receiving module (21) receives request information and/or reply information carrying tobacco tar taste of the other electronic cigarettes sent by other electronic cigarettes in the area.

15. The information interaction system applied to electronic cigarettes according to claim 14,
wherein the processor module (10) further connects to:
a switch unit (15), used for receiving users' input to control the identifying unit (101) to turn on or off.

16. The information interaction system applied to electronic cigarettes according to claim 14,
wherein the tobacco tar taste information is indicated by a taste code, the electronic cigarette further comprises a taste code obtaining unit (12) connected to the processor module (10), the taste code obtaining unit (12) is used for obtaining the taste code of the electronic cigarette itself.

17. The information interaction system applied to electronic cigarettes according to claim 16,
wherein the taste code obtaining unit (12) comprises a saving unit (122) used for saving the taste code and a confirming unit (121) used for confirming own taste code.

18. The information interaction system applied to electronic cigarettes according to claim 17,
wherein the confirming unit (121) is keys, used for receiving users' input to choose the corresponding taste code.

19. The information interaction system applied to electronic cigarettes according to claim 17,
wherein the electronic cigarette further comprises a code paste used for indicating the current tobacco tar taste information, the confirming unit (121) is a scanning identification device, the scanning identification device is used for scanning the code paste to confirm the taste code.

20. The information interaction system applied to electronic cigarettes according to claim 12,
wherein the electronic cigarette further comprises a statistics module, the statistics module used for making statistics for request information or reply information of the other electronic cigarettes obtained by the receiving module (21), and prompting the quantity of electronic cigarettes that have the same tobacco tar taste with itself.
